# EUROPÄISCHE PATENTSCHRIFT

(11) **EP 1 659 502 B1**
(45) Veröffentlichungstag und Bekanntmachung des Hinweises auf die Patenterteilung: **08.04.2009**
(21) Anmeldenummer: 04027564.6
(22) Anmeldetag: 19.11.2004
(51) Int. Cl.: G06F 17/21, G06F 17/22

(54) **Dynamische Erzeugung von Stilvorlagen für strukturierte Dokumente**
Dynamic generation of stylesheets for structured documents
Génération automatique de feuilles de style pour les documents structurés

(43) Veröffentlichungstag der Anmeldung: 24.05.2006
(73) Patentinhaber: BRANDAD Systems AG, 90762 Fürth (DE)
(72) Erfinder: Simon, Ansgar, 97080 Würzburg (DE); Isselhard, Jochen, 90765 Fürth (DE); Teichmann, Bodo, 90762 Fürth (DE)
(74) Vertreter: Grünecker, Kinkeldey, Stockmair & Schwanhäusser Anwaltssozietät

(56) Entgegenhaltungen:
- EP-A- 1 168 162
- WO-A-01/98927
- US-A1- 2002 116 516
- US-A1- 2003 037 076
- US-A1- 2004 205 551
- INTERNATIONAL BUSINESS MACHINES CORPORATION: "Parameterized XSL style sheets" RESEARCH DISCLOSURE, KENNETH MASON PUBLICATIONS, HAMPSHIRE, GB, Bd. 423, Nr. 110, Juli 1999 (1999-07), XP007124644 ISSN: 0374-4353

## Beschreibung

Die vorliegende Erfindung betrifft die Umwandlung strukturierter Dokumente und im Besonderen die dynamische Erzeugung von XSLT-Vorlagen zur Transformation von XML-Dokumenten.

Auszeichnungssprachen codieren elektronische Dokumente in einer Weise, dass sie mit unterschiedlichen Programmen und in unterschiedlichen Systemen dargestellt und bearbeitet werden können. Es werden die Eigenschaften und Zugehörigkeiten von bestimmten Wörtern, Sätzen und Abschnitten eines Textes beschrieben bzw. zugeteilt. Das elektronische Dokument nimmt durch die Codierung mit einer Auszeichnungssprache eine strukturierte Form an, die aufgrund der Hinzufügung von Marken ("tags") zu den einzelnen Bereichen des Dokuments entsteht. Weiterhin ist es durch Auszeichnungssprachen möglich, den Inhalt eines Dokuments von dessen Darstellung zu trennen, wodurch eine flexible Präsentation des Dokuments erleichtert wird.

Eine solche Auszeichnungssprache ist z.B. XML ("extensible markup language"). Mittels Marken unterteilt XML ein Dokument in einzelne Elemente, wobei jede Marke einen Markennamen aufweist, und schafft somit eine eindeutige hierarchische Struktur, die als Baum dargestellt werden kann. Um eine maximale Flexibilität bezüglich der Darstellung des XML-Dokuments zu erreichen, können sämtliche Informationen zur Formatierung und zum Layout des XML-Dokuments in einem von diesem getrennten Dokument aufbewahrt werden, der sogenannten Stilvorlage. Diese ist in einer Transformationsbeschreibungssprache geschrieben, z.B. XSLT ("extensible stylesheet language tranformation"). Ein Prozessor, in diesem Fall auch Parser genannt, wandelt ein ihm zugeführtes XML-Dokument mittels der in der Stilvorlage enthaltenen Transformationsregeln in ein transformiertes Dokument um, welches wiederum eine hierarchische baumartige Struktur aufweist. Dieses transformierte Dokument kann z.B. für die Darstellung in einem Webbrowser aufbereitet sein oder über einen weiteren Zwischenschritt in ein darstellungsorientiertes Präsentationsformat wie z.B. PDF ("portable document format") überführt werden.

Diese Trennung und Speicherung von Inhaltsinformationen und Darstellungsinformationen in separaten Dateien ermöglicht es, eine Änderung in der Gestaltung eines Dokuments, z.B. die Änderung des Fettdrucks von Überschriften in einen Kursivdruck, durch eine einzelne Änderung der Transformationsregel für Überschriften in der Stilvorlage durchzuführen, anstatt in dem Ausgangsdokument die Formatierung jeder Überschrift einzeln zu ändern. Außerdem kann eine Stilvorlage für mehrere Dokument angewendet werden und damit deren Erscheinungsbild durch eine einfache Änderung der Stilvorlage einheitlich verändert werden. Dies ist z.B. von großem Vorteil, wenn eine Firma für Ihre Werbedokumente oder anderweitige Unterlagen ein einheitliches Layout einhalten will, um dadurch bei dem Verbraucher einen hohen Wiedererkennungswert zu schaffen und somit ein Firmenimage zu unterstützen. Wird innerhalb der Firma entschieden, das Layout zu ändern, ist es nicht nötig, alle Dokumente zu ändern, sondern nur die Stilvorlage, mit der diese Dokumente verbunden sind.

Allerdings gibt es auch Anwendungen, bei denen sich die Dokumente zum größten Teil ähneln sollen, in speziellen Bereichen aber unterschiedlich sein dürfen. So kommt es in der Industrie häufig vor, dass die Herstellung eines Produktes und der Vertrieb eines Produktes durch verschiedene Firmen erfolgt. Ein gutes Beispiel hierfür ist die Automobilindustrie, bei der in der Regel der Vertrieb der vom Fahrzeughersteller produzierten Kraftfahrzeuge durch Fahrzeughändler erfolgt, die zwar von den jeweiligen Fahrzeugherstellern als Händler autorisiert sind, aber ansonsten eigenständige Firmen sind. In diesem Fall ist es wünschenswert, dass z.B. eine Zeitungswerbeanzeige des Fahrzeughändlers der Corporate Identity des Fahrzeugherstellers entspricht, die Werbeanzeige aber auch individuelle Merkmale des Fahrzeughändlers wie z.B. dessen Logo und Adresse mit der für diesen Fahrzeughändler typischen Formatierung enthält.

Gemäß dem Stand der Technik muss für diese Aufgabe sowohl das in der Auszeichnungssprache vorliegende Ausgangsdokument als auch die dazugehörige Stilvorlage geändert werden. Dies birgt einerseits die Gefahr, dass auch Teile des von dem Fahrzeughersteller gewünschten Layouts verändert werden, andererseits ist eine korrekte Anpassung auf Händlerseite ohne spezielle Kenntnisse der verwendeten Auszeichnungssprache, z.B. XML, fehleranfällig. Außerdem wird bei jeder - wenn auch kleinen - Änderung der Stilvorlage diese geänderte Stilvorlage als neues Dokument in einer neuen Datei abgespeichert, was zu einer beträchtlichen Anzahl von Dokumenten bzw. Dateien mit einer zunehmend speicheraufwendigen, wartungsintensiven und unübersichtlichen Verwaltung führen kann. Falls das XSLT-Dokument bereits vorab mehrere Möglichkeiten zur Transformation des Ausgangsdokuments bietet, d.h. mehrere Transformationsregeln zur Transformation eines mit einer bestimmten Marke verbundenen Elements enthält, ist die Stilvorlage umfangreicher als für eine konkrete Transformation erforderlich und belegt damit auch mehr Speicherplatz als notwendig.

US 2003/0037076 (20 Feb 2003) beschreibt ein Verfahren, in dem Stilvorlagen aus Komponenten zusammengebaut werden, allerdings nicht zum Zeitpunkt der Übersetzunganforderung.

Es ist daher Aufgabe der vorliegenden Erfindung, eine flexiblere und effizientere Erzeugung von formatierten Dokumenten aus strukturierten Ausgangsdokumenten zu ermöglichen.

Diese Aufgabe wird durch die Gegenstände der Hauptansprüche gelöst.

Bevorzugte Ausgestaltungen der vorliegenden Erfindung sind Gegenstände der Unteransprüche.

Der Erfindung liegt der Gedanke zugrunde, nicht mehr wie bisher eine Stilvorlage als einzelnes Dokument zu generieren und dauerhaft abzuspeichem, um sie nach einer Transformationsanforderung für ein mit dieser Stilvorlage verbundenes Ausgangsdokument gemeinsam mit diesem in einem Prozessor zu verarbeiten, sondern die Stilvorlage erst zum Zeitpunkt der Übersetzungsanforderung aus einzelnen Blöcken dynamisch zu generieren. Die einzelnen Blöcke sind in einer Transformationsbeschreibungssprache beschrieben und beinhalten Transformationsregeln für einzelne Elemente des Ausgangsdokuments und werden als separate Dateien in einem Verzeichnis abgespeichert. Die Zuordnung der einzelnen Blöcke mit Transformationsregeln zu den einzelnen Elementen des Ausgangsdokuments erfolgt über die Marken des Ausgangsdokuments. Dadurch kann nach einer Anforderung zur Übersetzung des Ausgangsdokuments eine maßgeschneiderte Stilvorlage aus den den Marken des Ausgangsdokuments zugeordneten Transformationsblöcken zusammengesetzt und dem Prozessor zur gemeinsamen Verarbeitung mit dem Ausgangsdokument zugeführt werden. Eine dauerhafte Speicherung der Stilvorlage ist nicht notwendig, da Sie jederzeit wieder aus den abgespeicherten Transformationsblöcken generiert werden kann.

Gemäß einem bevorzugten Aspekt der vorliegenden Erfindung wird ein Verfahren zum computerunterstützten dynamischen Erzeugen einer Stilvorlage in einer Transformationsbeschreibungssprache für ein in einer Auszeichnungssprache vorliegendes Quelldokument zur Verfügung gestellt, wobei die Auszeichnungssprache das Quelldokument durch Zuweisung von Marken in Elemente strukturiert. Es werden einzelne Transformationsblöcke in einer Transformationsbeschreibungssprache erzeugt und abgespeichert, wobei die einzelnen Transformationsblöcke den einzelnen Elementen des Quelldokuments über die entsprechenden Marken zugeordnet sind und Regeln zur Transformation des jeweils zugeordneten Elements enthalten. Nach Erhalt einer Anweisung zum Transformieren des Quelldokuments werden die den einzelnen Elementen des Quelldokuments über die entsprechenden Marken zugeordneten Transformationsblöcke dynamisch zu der Stilvorlage für das Quelldokument zusammengesetzt.

Gemäß einem weiteren Aspekt der vorliegenden Erfindung wird die dynamisch zusammengesetzte Stilvorlage nach einer gemeinsamen Verarbeitung mit dem Quelldokument in einem Prozessor, d.h. der Transformation des Quelldokuments mit Hilfe der in der Stilvorlage enthaltenen Transformationsregeln, wieder gelöscht.

Gemäß einem weiteren Aspekt der vorliegenden Erfindung können Stiländerungen für einzelne Elemente des Ausgangsdokuments durch einfaches Austauschen der mit den entsprechenden Marken verbundenen Transformationsblöcke erreicht werden.

Gemäß einer weiteren bevorzugten Ausführungsform der vorliegenden Erfindung wird eine Vielzahl von XML-Vorlagen bereitgestellt, in denen bestimmte Bereiche als unveränderbar markiert sind und andere Bereiche als veränderbar markiert sind. Für jede der einzelnen XML-Vorlagen werden XSLT-Blöcke für die einzelnen XML-Marken der unveränderbaren Bereiche separat erzeugt und anschließend in einem der jeweiligen XML-Vorlage zugeordneten Verzeichnis gespeichert. Eine XML-Vorlage aus der Vielzahl von XML-Vorlagen wird von einem Benutzer ausgewählt. Ein Teil der veränderbaren Bereiche der XML-Vorlage wird aufgrund einer z.B. benutzerspezifischen Voreinstellung automatisch ausgefüllt und entsprechend der neuen XML-Marken werden weitere XSLT-Blöcke erzeugt und in dem der ausgewählten XML-Vorlage zugeordneten Verzeichnis abgespeichert. Ein anderer Teil der veränderbaren Bereiche wird aufgrund einer Benutzerinteraktion ausgefüllt und anschließend werden wiederum entsprechend der hinzugekommenen XML-Marken XSLT-Blöcke erzeugt und in dem der ausgewählten XML-Vorlage zugeordneten Verzeichnis abgespeichert. Nach Erhalt einer Anweisung zum Transformieren des Quelldokuments werden die den einzelnen Marken des Quelldokuments zugeordneten Blöcke mit den Transformationsregeln zu der Stilvorlage für das Quelldokument zusammengesetzt. Nach einer anschließenden Transformation des Quelldokuments mittels der Transformationsregeln aus der zusammengesetzten Stilvorlage kann die Stilvorlage gelöscht werden.

Bevorzugterweise werden die erfindungsgemäßen Verfahren in Computersystemen angewendet und durch Rechneranweisungen implementiert, die auf computerlesbaren Speichermedien gespeichert sind.

Weitere Vorteile sowie bevorzugte Ausführungsformen der vorliegenden Erfindung ergeben sich im folgenden unter Bezugnahme auf die beiliegenden Zeichnungen. Dabei zeigen die Zeichnungen im einzelnen:
Figur 1 eine schematische Darstellung einer Transformation eines Quelldokuments gemäß dem Stand der Technik;
Figur 2a eine schematische Darstellung von Transformationen von mehreren Quelldokumenten mittels einer Stilvorlage gemäß dem Stand der Technik;
Figur 2b eine schematische Darstellung von mehreren Transformationen eines Quelldokuments mittels mehrerer Stilvorlagen gemäß dem Stand der Technik;
Figur 3a eine schematische Darstellung einer Transformation eines Quelldokuments gemäß der vorliegenden Erfindung;
Figur 3b eine schematische Darstellung von mehreren Transformationen eines Quelldokuments gemäß der vorliegenden Erfindung;
Figur 4 ein Ablaufdiagramm, das die dynamische Erzeugung einer Stilvorlage für ein Quelldokument gemäß einer bevorzugten Ausführungsform der vorliegenden Erfindung aufzeigt; und
Figur 5 ein Ablaufdiagramm, das die dynamische Erzeugung einer Stilvorlage für ein Quelldokument gemäß einer weiteren bevorzugten Ausführungsform der vorliegenden Erfindung aufzeigt.

Zur Erläuterung bevorzugter Ausführungsformen der vorliegenden Erfindung werden im folgenden die beigefügten Figuren näher erläutert, wobei sich entsprechende Komponenten mit gleichen Bezugszeichen versehen sind. Gemäß einer bevorzugten Ausführungsform wird als Auszeichnungssprache XML und als Transformationsbeschreibungssprache XSLT verwendet. Diese Auswahl ist bevorzugt, jedoch ist die vorliegende Erfindung nicht auf die Verwendung dieser Sprachen beschränkt. So kann anstelle der Auszeichnungssprache XML jede andere strukturierte Auszeichnungssprache wie z.B. SGML und anstelle von XSLT jede andere für die Bearbeitung von strukturierten Dokumenten geeignete Transformationsbeschreibungssprache verwendet werden.

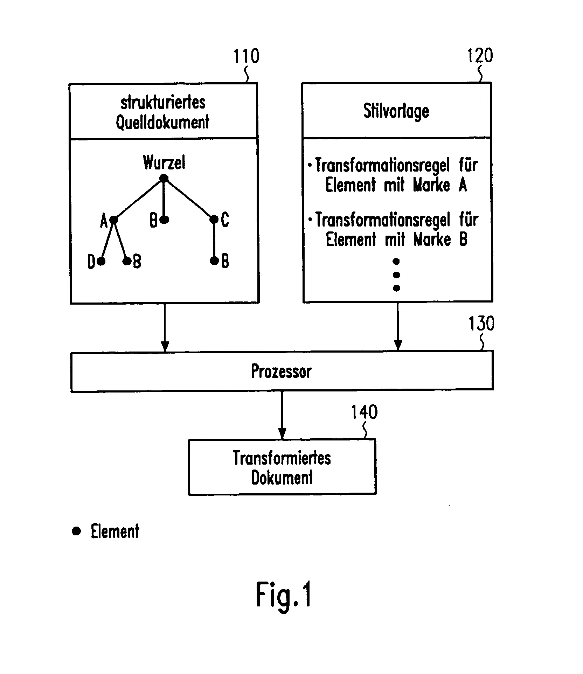

Figur 1 zeigt eine schematische Darstellung einer aus dem Stand der Technik bekannten Transformation eines Quelldokuments. Das Quelldokument 110 liegt in strukturierter Form vor, z.B. als XML-Dokument. XML ist eine Auszeichnungssprache zum Erstellen von strukturierten Dokumenten, die eine Trennung der Dokumentdaten von ihrer Repräsentation ermöglicht. Ein in dieser Weise in Elemente strukturiertes Dokument lässt sich mittels eines Baumdiagramms mit Wurzelelement und Knotenelementen darstellen. Die einzelnen Elemente sind durch Marken (Wurzel, A, B, C, D) gekennzeichnet. Sind z.B. im Quelldokument 110 Abschnittsüberschriften mit Marke A gekennzeichnet und einfacher Text mit Marke B, kann dies folgendermaßen dargestellt werden:
<A>Kapitel 1.1: Beispiele</A>
<B>Hier steht ein einfacher erster Text</B>
<B>Hier steht ein einfacher zweiter Text</B>

Zwischen den Kennzeichnungen des Markenanfangs (<A>, <B>) und des Markenendes (</A>, </B>) stehen die Inhaltsdaten. Zusammen mit den Strukturinformationen aus dem Dokumentbaum kann auf diese Weise ein Dokument strukturiert dargestellt werden. Derartig aufgebaute Dokumente können mittels einer Stilvorlage, die Transformationsregeln für die durch die Marken gekennzeichneten Elemente des Quelldokuments beinhalten, in ein anderes Format umgewandelt werden. Die Stilvorlage 120 für das Quelldokument 110 enthält z. B. folgende Einträge:
<xsl:template match="A">
   <h1>
   <xsl:apply-templates>
   </h1>
</xsl:template>

Dieser Eintrag der Stilvorlage stellt eine Transformationsregel dar, durch die den Elementen mit der Marke A (xsl:template match="A") eine Formatierung als Überschrift (<h1>) in dem für einen Webbrowser geeigneten Darstellungsformat HTML ("hypertext markup language") zuweist. Dadurch kann ein Prozessor 130 ein ihm zugeführtes Quelldokument 110 mittels der Stilvorlage 120 in ein transformiertes Dokument 140, z.B. ein für die Darstellung in einem Webbrowser geeignetes HTML-Dokument, umwandeln.

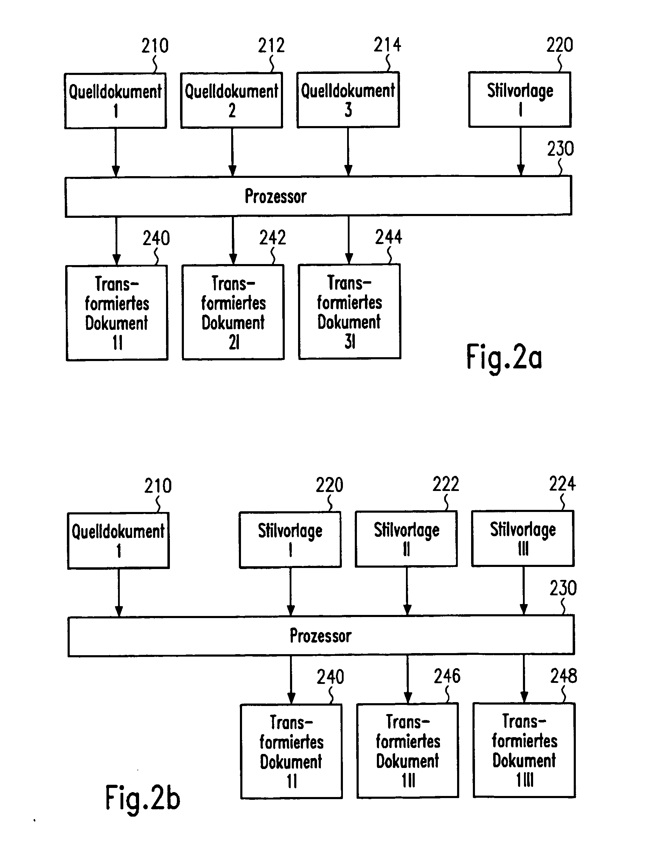

Figur 2a und 2b zeigen die Vorteile auf, die sich ergeben, wenn Inhaltsinformationen und Darstellungsinformationen eines Dokuments getrennt voneinander in verschiedenen Dateien aufbewahrt werden. In Figur 2a wird dargestellt, dass ein Prozessor 130 mittels einer einzigen Stilvorlage I (220) verschiedene Quelldokumente (210, 212, 214) in transformierte Dokumente (240, 242, 244) umwandeln kann. Wird z.B. das Quelldokument 1 (210) mit der Stilvorlage I (220) im Prozessor 230 verarbeitet, wird das transformierte Dokument 1I (240) erzeugt. Wird andererseits das Quelldokument 3 (214) mit der Stilvorlage I (220) verarbeitet, erzeugt der Prozessor 230 das transformierte Dokument 3I (244). Durch das Verwenden einer einzigen Stilvorlage 220 wird ein einheitliches Aussehen der transformierten Dokumente 240, 242 und 244 ermöglicht. Änderungen in der Stilvorlage I wirken sich dabei gleichermaßen auf die zu transformierenden Dokumente aus. Dies ist z.B. dann vorteilhaft, wenn ein Hersteller verschiedene seiner Produkte mit Werbeanzeigen bewerben will, die ein einheitliches Layout aufweisen sollen.

Umgekehrt wird in Figur 2b verdeutlicht, dass ein bestimmtes Quelldokument 1 (210) auch mit verschiedenen Stilvorlagen 220, 222 und 224 verarbeitet werden kann. Wie in Figur 2a ergibt sich dabei das transformierte Dokument 1I (240), wenn das Quelldokument 1 (210) mit der Stilvorlage I (220) im Prozessor 230 verarbeitet wird. Wird aber eine andere Darstellung des Quelldokuments gewünscht, kann dies durch die Verarbeitung mit einer anderen Stilvorlage erreicht werden. So erzeugt der Prozessor 230 z.B. durch die Verarbeitung des Quelldokuments 1 (210) mit der Stilvorlage II (222) das transformierte Dokument 1II (246) und durch die Verarbeitung mit der Stilvorlage III (224) das transformierte Dokument 1III (248). Dies ist z.B. dann von Vorteil, wenn ein Hersteller eines seiner Produkte mit verschiedenen Werbeanzeigen bewerben will, deren Layouts je nach Zielgruppe oder auch Medium (z.B. Zeitung oder Internet) entworfen werden.

Dem in den Figuren 1, 2a und 2b gezeigten Stand der Technik ist gemein, dass die jeweiligen Stilvorlagen in sich geschlossene Dokumente sind, die in einem Speicher abgelegt sind und auf die - nach einer Anforderung für eine Transformation eines Quelldokuments - von dem für die Transformation zuständigen Prozessor zugegriffen wird. Das bedeutet, dass gemäß dem Stand der Technik auch bei kleinen Änderungen des Layouts, wie z.B. der Änderung des Fettdrucks von Überschriften in einen Kursivdruck, eine neue Stilvorlage erzeugt und abgespeichert wird. Wenn für die Darstellung eines Dokuments viele Layouts zur Verfügung stehen sollen, die sich nur leicht voneinander unterscheiden, führt dies zu einer Vielzahl von abgespeicherten Stilvorlagen, deren Inhalt stark redundant ist, wodurch mehr Speicherplatz als eigentlich erforderlich benötigt wird. Zudem führt diese Vielzahl zu einem hohen Verwaltungsaufwand. Wird z.B. gewünscht, dass für ein bestimmtes Element in dieser Vielzahl von ähnlichen Stilvorlagen die Transformationsregel gleichermaßen geändert werden soll, muss diese Änderung in allen betroffenen Stilvorlagen separat durchgeführt werden.

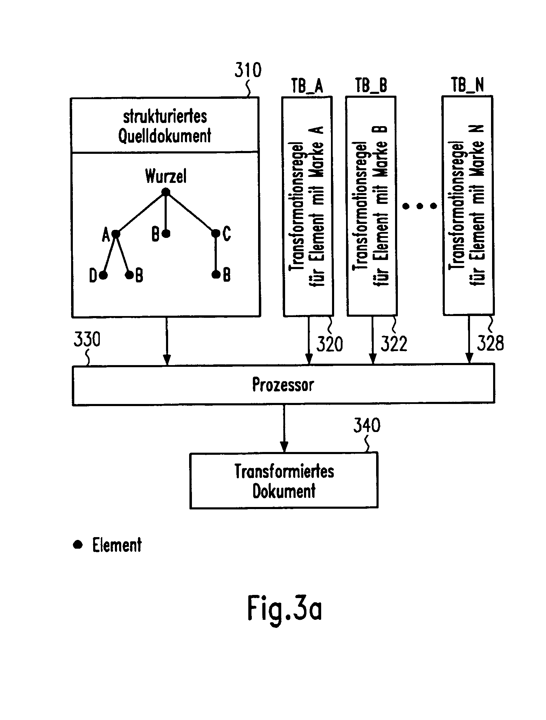

Figur 3a stellt eine schematische Darstellung einer Transformation eines Quelldokuments gemäß einer bevorzugten Ausführungsform der vorliegenden Erfindung dar, die die oben angesprochenen Probleme des Standes der Technik löst. Wie in Figur 1 wird ein strukturiertes Quelldokument 310 gezeigt, welches durch einen Prozessor 330 zu einem transformierten Dokument 340 umgewandelt wird. Allerdings holt sich der Prozessor 340 die zur Umwandlung benötigten Transformationsregeln nicht aus einer in einem Speicher abgelegten Stilvorlage 120, sondern erzeugt die Stilvorlage erst dann dynamisch, wenn eine Anforderung zur Transformation des Quelldokuments vorliegt. Dazu greift der Prozessor auf in einem Speicher abgelegte eigenständige Dateien zurück, den Transformationsblöcken TB_A bis TB_N (320, 322, 328). Jeder dieser Transformationsblöcke enthält eine Transformationsregel für ein bestimmtes Element aus der Vielzahl von Elementen A - D, die im Quelldokument 310 vorhanden sind. Dabei sind die Transformationsblöcke (320, 322, 328) über die die jeweiligen Elemente kennzeichnenden Marken mit diesen Elementen verbunden. Der Prozessor 330 setzt nach der Transformationsanforderung eine dem Quelldokument 310 angepasste Stilvorlage dynamisch aus den den Marken A - D des Quelldokuments 310 zugeordneten Transformationsblöcken TB_A - TB_D zusammen. Mit dieser angepassten Stilvorlage erzeugt der Prozessor 330 dann das transformierte Dokument 340. Die Verbindung zwischen dem Prozessor 330 und dem Transformationsblock 328 ist nur leicht gestrichelt gekennzeichnet, weil das Quelldokument 310 kein Element mit der Marke N aufweist und deshalb für die Transformation des Quelldokuments keine Transformationsregel für ein mit der Marke N verbundenes Element benötigt wird, weshalb die Stilvorlage ohne den Transformationsblock TB_N (328) erzeugt wird. Wird allerdings das Quelldokument 310 in der Weise verändert, dass es ein Element mit der Marke N aufweist, wird nach einer Transformationsanweisung eine Stilvorlage dynamisch zusammengesetzt, die den Transformationsblock TB_N (328) beinhaltet. Einmal erzeugte Transformationsblöcke können in einem bestimmten Verzeichnis abgespeichert werden und stehen somit für die dynamische Erzeugung einer Stilvorlage zur Verfügung. Ein dauerhaftes Abspeichem der dynamisch erzeugten Stilvorlagen ist nicht notwendig, da sie jederzeit aus den zur Verfügung stehenden abgespeicherten Transformationsblöcken neu zusammengesetzt werden können.

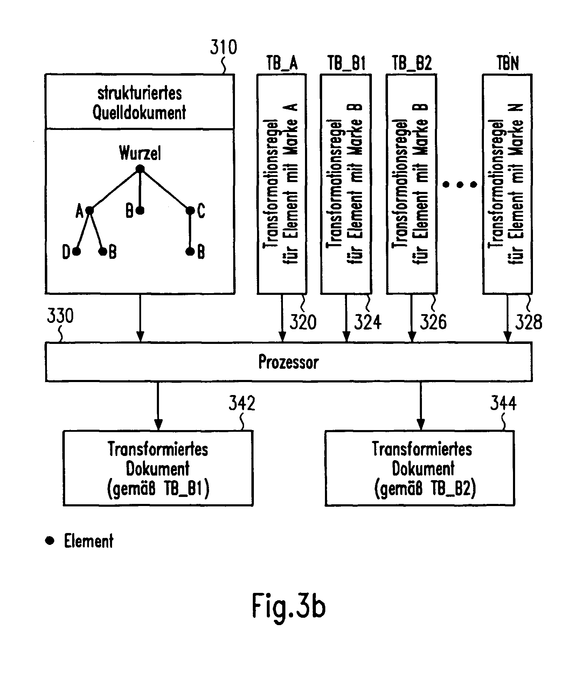

Figur 3b zeigt einen weiteren Aspekt der vorliegenden Erfindung. Sollen für ein bestimmtes Element B des Quelldokuments 310 mehrere Layoutoptionen zur Verfügung gestellt werden, werden dementsprechend mehrere Transformationsblöcke, z.B. TB_B1 (324) und TB_B2 (326) geschrieben und abgespeichert. Soll das Element B mittels einer ersten Transformationsregel umgewandelt werden, wird dies dem Prozessor 330 mittels einem mode-Attribut, einer Priorisierung oder einer sonstigen geeigneten Technik mitgeteilt. Der Prozessor 330 setzt dann nach einer Transformationsanforderung eine entsprechende Stilvorlage zusammen, die den Transformationsblock TB_B1 (324) mit der ersten Transformationsregel enthält. Wird dem Prozessor 330 andererseits mitgeteilt, eine zweite Transformationsregel zu verwenden, wird nach einer Transformationsanforderung eine Stilvorlage mit dem die zweite Transformationsregel enthaltenden Transformationsblock TB_B2 (326) dynamisch erzeugt.

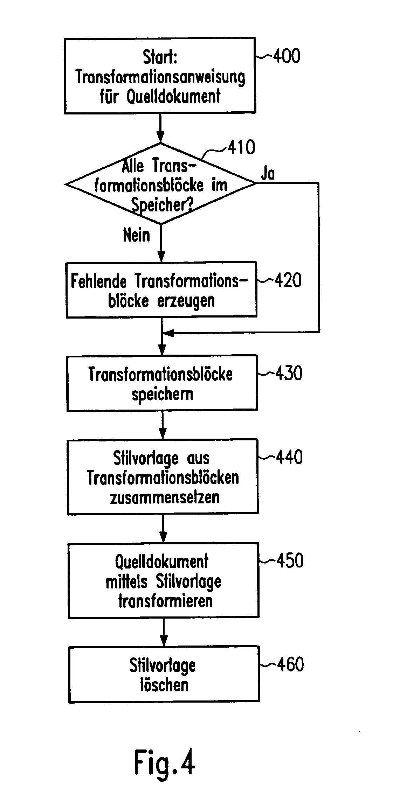

Anhand von Figur 4 in Verbindung mit Figur 3 werden nun die Schritte einer bevorzugten Ausführungsform des erfindungsgemäßen Verfahrens erläutert.

Zu Beginn des Verfahrens erhält der Prozessor 330 in Schritt 400 die Anweisung, das strukturierte Quelldokument 310 zu transformieren. In Schritt 410 überprüft der Prozessor 330, ob alle für das Zusammensetzen einer dem Quelldokument 310 angepassten Stilvorlage notwendigen Transformationsblöcke TB vorhanden sind. Dazu sucht der Prozessor in einem Speicher nach den benötigten Transformationsblöcken; vorzugsweise ist für die Speicherung von Transformationsblöcken ein spezielles Verzeichnis im Speicher vorgesehen. Die Transformationsblöcke sind dabei den einzelnen Elementen durch die die Elemente kennzeichnenden Marken zugeordnet. Werden nicht alle benötigten Transformationsblöcke von dem Prozessor gefunden, veranlasst er das Erzeugen der fehlenden Transformationsblöcke. Dies geschieht im einfachsten Fall dadurch, dass der Prozessor eine Fehlermeldung ausgibt und einem Benutzer das Fehlen der notwendigen Transformationsblöcke anzeigt und der Benutzer diese Transformationsblöcke z.B. mittels dafür speziell vorhergesehenen Editoren erzeugt. In einem anderen Fall kann der Prozessor die notwendigen Transformationsblöcke mittels einer für diesen Fall vorgesehenen Ausnahmeroutine erzeugen und z.B. einen vorgegebenen Transformationsblock einsetzen. Nach dem Erzeugen der Transformationsblöcke in Schritt 420 werden die erzeugten Transformationsblöcke in Schritt 430 gespeichert. In Schritt 440 setzt der Prozessor eine dem Quelldokument 310 angepasste Stilvorlage aus den benötigten Transformationsblöcken zusammen. Anschließend führt der Prozessor in Schritt 450 die Transformation des Quelldokuments mittels der dynamisch generierten Stilvorlage durch. Nach erfolgter Transformation wird die Stilvorlage in Schritt 460 gelöscht. Die erzeugten Transformationsblöcke hingegen können bei einer nächste Transformationsanweisung wieder verwendet werden.

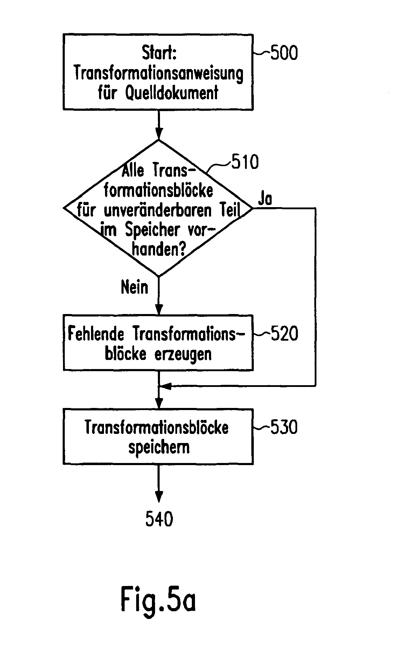

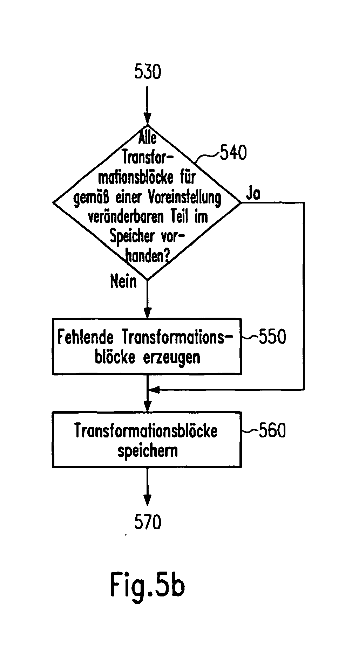

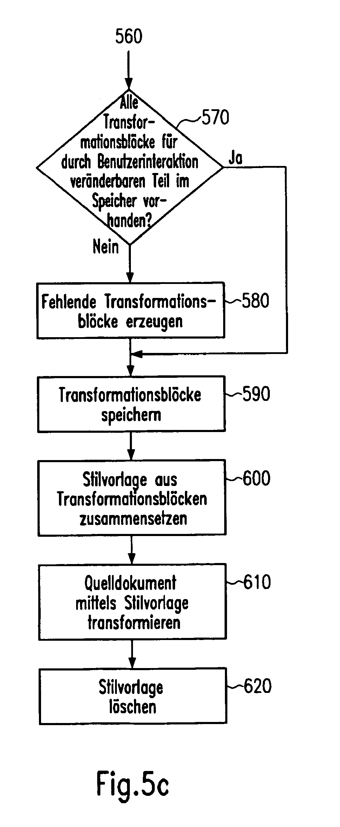

In Figur 5 wird eine weitere bevorzugte Ausführungsform des erfindungsgemäßen Verfahrens gezeigt. Diese Ausführungsform ist besonders für den Fall geeignet, dass in einem strukturierten Quelldokument bestimmte Bereiche bzw. das entsprechende Layout unveränderbar sein sollen, andere Bereiche bzw. deren Layout aber veränderbar sein sollen. Teile des veränderbaren Bereichs sollen dabei über eine Voreinstellung, andere Teile durch Benutzerinteraktion ausgefüllt werden können. Eine derartige Dokumentenstruktur für das Quelldokument kann z.B. durch XML-Schema oder eine andere Schemasprache erstellt werden. Es können auch mehrere durch XML-Schema erzeugte Vorlagen bereitgestellt werden, aus denen ein Benutzer auswählen kann. Vorzugsweise werden den einzelnen Vorlagen separate Verzeichnisse für die benötigten Transformationsblöcke zugeordnet.

Zu Beginn des Verfahrens erhält der Prozessor 330 in Schritt 500 die Anweisung, das strukturierte Quelldokument 310 zu transformieren. Zuerst überprüft der Prozessor im Schritt 510, ob alle einem als unveränderbar markierten Teil des Quelldokuments entsprechenden Transformationsblöcke TB vorhanden sind. Dazu sucht der Prozessor in einem Speicher nach den benötigten Transformationsblöcken in ähnlicher Weise, wie oben im Zusammenhang mit Figur 4 beschrieben. Werden nicht alle benötigten Transformationsblöcke von dem Prozessor gefunden, veranlasst er das Erzeugen der fehlenden Transformationsblöcke ebenfalls wie bei Figur 4 erläutert. Nach dem Erzeugen der fehlenden Transformationsblöcke in Schritt 520 werden die erzeugten Transformationsblöcke in Schritt 530 gespeichert. In Schritt 540 überprüft der Prozessor, ob alle einem gemäß einer Voreinstellung veränderbaren Teil des Quelldokuments entsprechenden Transformationsblöcke TB im Speicher vorhanden sind. Werden nicht alle benötigten Transformationsblöcke von dem Prozessor gefunden, veranlasst er das Erzeugen der fehlenden Transformationsblöcke. Nach dem Erzeugen der fehlenden Transformationsblöcke in Schritt 550 werden die erzeugten Transformationsblöcke in Schritt 560 gespeichert. Im anschließenden Schritt 570 überprüft der Prozessor, ob alle einem von einem bestimmten Benutzer veränderbaren Teil des Quelldokuments entsprechenden Transformationsblöcke TB im Speicher vorhanden sind . Werden nicht alle benötigten Transformationsblöcke von dem Prozessor gefunden, veranlasst er das Erzeugen der fehlenden Transformationsblöcke. Nach dem Erzeugen der fehlenden Transformationsblöcke in Schritt 580 werden die erzeugten Transformationsblöcke in Schritt 590 gespeichert. Im anschließenden Schritt 600 setzt der Prozessor eine dem Quelldokument 310 angepasste Stilvorlage aus den benötigten Transformationsblöcken zusammen. Anschließend führt der Prozessor in Schritt 610 die Transformation des Quelldokuments mittels der dynamisch generierten Stilvorlage durch. Nach erfolgter Transformation wird die Stilvorlage in Schritt 620 gelöscht. Die erzeugten Transformationsblöcke hingegen können bei einer nächste Transformationsanweisung wieder verwendet werden.

Wie obenstehend anhand von bevorzugten Ausführungsformen beschrieben, erlaubt die vorliegende Erfindung eine effizientere Speichernutzung, da der für die Aufbewahrung der verschiedenen Transformationsblöcke benötigte Speicherplatz deutlich geringer ist als bei einer Aufbewahrung der jeweiligen kompletten Stilvorlagen. Die Flexibilität bei der Gestaltung des Layouts der transformierten Dokumente bleibt dabei vollständig erhalten.

Zudem ist die Verwaltung und Pflege einer Vielzahl von Transformationsblöcken gegenüber der Verwaltung und Pflege einer Vielzahl von Stilvorlagen deutlich vereinfacht. Weiterhin kann bei geeignetem Systemdesign die Erstellung von veränderten Stilvorlagen erleichtert werden und somit auch unerfahrenen Benutzern ermöglicht werden. Dazu kann ein Benutzer z.B. aus einer vorbestimmten Auswahl von XML-Vorlagen auswählen, für deren einzelnen Elemente bzw. deren zugeordnete Marken bereits Transformationsblöcke mit entsprechenden Transformationsregeln existieren, und diese Vorlagen mit einem Editor verändern, ohne dass neue Marken kreiert werden. Die dynamische Erzeugung von Stilvorlagen kann dadurch auch von Benutzern ohne spezielle Kenntnisse durchgeführt werden.

## Patentansprüche

1. Verfahren zum dynamischen computerunterstützten Erzeugen einer Stilvorlage in einer Transformationsbeschreibungssprache für ein in einer Auszeichnungssprache vorliegendes Quelldokument, wobei die Auszeichnungssprache das Quelldokument durch Zuweisung von Marken in Elemente strukturiert, wobei das Verfahren die Schritte umfasst:
Erhalten (400) einer Anweisung zum Transformieren des Quelldokuments;
Überprüfen (410), ob für die einzelnen Elemente des Quelldokuments entsprechende Transformationsblöcke, die diesen Elementen des Quelldokuments mittels der entsprechenden Marken zugeordnet sind und Regeln zur Transformation des jeweils zugeordneten Elements enthalten, in einem Speicher vorhanden sind;
Erzeugen (420), falls entsprechende Transformationsblöcke fehlen, der fehlenden Transformationsblöcke in der Transformationsbeschreibungssprache;
Speichern (430) der erzeugten Transformationsblöcke; und
Zusammensetzen (440), nach Erhalt einer Anweisung zum Transformieren des Quelldokuments, der den einzelnen Elementen des Quelldokuments zugeordneten Transformationsblöcke zu der Stilvorlage für das Quelldokument.

2. Verfahren nach Anspruch 1, zusätzlich umfassend den Schritt des Transformierens (450) des Quelldokuments in ein Zieldokument mittels der Stilvorlage.

3. Verfahren nach Anspruch 2, zusätzlich umfassend den Schritt des Löschens (460) der Stilvorlage nach dem Transformieren des Quelldokuments.

4. Verfahren nach einem der Ansprüche 1 bis 3, wobei in einem oder in mehreren der Transformationsblöcke mehrere Transformationsregeln zur Auswahl enthalten sind.

5. Verfahren nach einem der Ansprüche 1 bis 4, wobei einem oder mehreren der einzelnen Elemente mehrere Transformationsblöcke zur Auswahl zugeordnet sind.

6. Verfahren nach einem der Ansprüche 1 bis 5, wobei bestimmte Bereiche von Marken und den mit diesen verbundenen Elementen als unveränderbar markiert sind und die Verfahrensschritte des Überprüfens und des Erzeugens separat für die als unveränderbar markierten Bereiche und für die nicht als unveränderbar markierten Bereiche durchgeführt werden.

7. Verfahren nach Anspruch 6, wobei die Einteilung in als unveränderbar und als nicht unveränderbar markierte Bereiche durch ein Definitionsschema zur Definition der Dokumentstruktur erfolgt.

8. Verfahren nach Anspruch 6 oder 7, wobei ein Teil der nicht als unveränderbar markierten Bereiche aufgrund einer Voreinstellung und ein anderer Teil aufgrund einer Benutzerinteraktion veränderbar ist und die Verfahrensschritte des Überprüfens und des Erzeugens separat für den aufgrund einer Voreinstellung veränderbaren Teil und für den aufgrund einer Benutzerinteraktion veränderbaren Teil durchgeführt werden.

9. Verfahren nach Anspruch 8, wobei die Einteilung in als aufgrund einer Voreinstellung und als aufgrund einer Benutzerinteraktion veränderbaren Teile durch ein Definitionsschema zur Definition der Dokumentstruktur erfolgt.

10. Verfahren nach Anspruch 9, wobei die Transformationsblöcke in einem dem Definitionsschema zugeordneten Verzeichnis abgespeichert werden.

11. Verfahren nach einem der Ansprüche 1 bis 9, wobei die Transformationsblöcke in einem gemeinsamen vorbestimmten Verzeichnis des Speichers abgespeichert werden.

12. Verfahren nach einem der vorangehenden Ansprüche, wobei die Auszeichnungssprache eine Sprache gemäß XML ist und die Transformationsbeschreibungssprache eine Sprache gemäß XSLT ist.

13. Computerlesbares Speichermedium, welches Anweisungen zum Ausführen eines Verfahrens gemäß der Ansprüche 1 bis 12 enthält.

## Claims

1. Method for dynamic computer-supported generation of a stylesheet in a transformation description language for a source document present in a markup language, the markup language structuring the source document into elements by the assignment of marks, the method containing the steps:
Receiving (400) of an instruction to transform the source document;
Checking (410) of whether, for the individual elements of the source document, corresponding transformation blocks which are related to these elements of the source document by means of the corresponding marks and contain rules for the transformation of the respective related element, are present in a memory;
In the absence of such transformation blocks, generation (420) of the missing transformation blocks in the transformation description language;
Storing (430) of the generated transformation blocks; and
After receipt of an instruction to transform the source document, assembly (440) of the transformation blocks assigned to the individual elements of the source document, into the stylesheet for the source document.

2. Method according to Claim 1, additionally including the step of transforming (450) the source document into a target document by means of the stylesheet.

3. Method according to Claim 1, additionally including the step of deleting (460) the stylesheet after the transformation of the source document.

4. Method according to one of the claims 1 to 3, several transformation rules being held for selection in one or more of the transformation blocks.

5. Method according to one of the claims 1 to 4, several transformation blocks being assigned for selection to one or more of the individual elements.

6. Method according to one of the claims 1 to 5, certain ranges of marks and the elements linked to these being marked as unchangeable, and the process steps for checking and generation being executed separately for the ranges marked as unchangeable and the ranges not marked as unchangeable.

7. Method according to Claim 6, the classification into ranges marked as unchangeable and ranges marked as not unchangeable occurring through a definition schema for the definition of the document structure.

8. Method according to Claim 6 or 7, one part of the ranges not marked as unchangeable being changeable on the basis of a presetting and another part being changeable on the basis of a user interaction, and the process steps for checking and generation being executed separately for the part which can be changed on the basis of a presetting and for the part which can be changed on the basis of a user interaction.

9. Method according to Claim 8, the classification into parts which can be changed on the basis of a presetting and parts which can be changed on the basis of a user interaction occurring through a definition schema for the definition of the document structure.

10. Method according to Claim 9, the transformation blocks being stored in a directory assigned to the definition schema.

11. Method according to one of the claims 1 to 9, the transformation blocks being stored in a common predetermined directory of the memory.

12. Method according to one of the preceding claims, the markup language being a language in accordance with XML, and the transformation description language being a language in accordance with XSLT.

13. Computer-readable storage medium, which contains instructions for executing a method in accordance with Claims 1 to 12.

## Revendications

1. Procédé de génération dynamique, assistée par ordinateur, d'une feuille de style dans un langage de description de transformation pour un document source existant dans un langage de balisage, dans lequel le langage de balisage structure en éléments le document source par l'attribution de balises, le procédé comprenant les étapes consistant à :
obtenir (400) une instruction pour la transformation du document source ;
vérifier (410) s'il existe dans une mémoire, pour les éléments individuels du document source, des blocs de transformation correspondants qui sont attribués à ces éléments du document source au moyen des balises correspondantes, et des règles pour la transformation de l'élément respectivement attribué ;
générer (420), si des blocs de transformation correspondants n'existent pas, les blocs de transformation manquants dans le langage de description de transformation ;
sauvegarder (430) les blocs de transformation générés ; et
assembler (440), après obtention d'une instruction pour la transformation du document source, les blocs de transformation attribués aux éléments individuels du document source pour former la feuille de style pour le document source.

2. Procédé selon la revendication 1, comprenant en outre l'étape consistant à transformer (450) le document source en document cible au moyen de la feuille de style.

3. Procédé selon la revendication 2, comprenant en outre l'étape consistant à supprimer (460) la feuille de style après la transformation du document source.

4. Procédé selon l'une quelconque des revendications 1 à 3, dans lequel dans un ou plusieurs des blocs de transformation, plusieurs règles de transformation sont contenues au choix.

5. Procédé selon l'une quelconque des revendications 1 à 4, dans lequel plusieurs blocs de transformation au choix sont attribués à un ou plusieurs des éléments individuels.

6. Procédé selon l'une quelconque des revendications 1 à 5, dans lequel certaines zones sont marquées comme invariables par des balises et les éléments associés à celles-ci, et les étapes de vérification et de génération sont effectuées séparément pour les zones marquées comme invariables et pour les zones non marquées comme invariables.

7. Procédé selon la revendication 6, dans lequel la répartition en zones marquées comme invariables et non invariables est effectuée par un schéma de définition pour la définition de la structure de document.

8. Procédé selon la revendication 6 ou 7, dans lequel une partie des zones non marquées comme invariables est variable sur la base d'un préréglage et une autre partie est variable sur la base d'une interaction d'utilisateur, et les étapes de vérification et de génération sont effectuées séparément pour la partie variable sur la base d'un préréglage et sur la base d'une interaction d'utilisateur.

9. Procédé selon la revendication 8, dans lequel la répartition en parties variables sur la base d'un préréglage et sur la base d'une interaction d'utilisateur s'effectue par un schéma de définition pour la définition de la structure de document.

10. Procédé selon la revendication 9, dans lequel les blocs de transformation sont sauvegardés dans un répertoire attribué au schéma de définition.

11. Procédé selon l'une quelconque des revendications 1 à 9, dans lequel les blocs de transformation sont sauvegardés dans un répertoire prédéfini commun de la mémoire.

12. Procédé selon l'une quelconque des revendications précédentes, dans lequel le langage de balisage est un langage conforme à XML et le langage de description de transformation est un langage conforme à XSLT.

13. Support de mémoire lisible par ordinateur, comprenant des instructions pour exécuter un procédé selon les revendications 1 à 12.
